# EUROPEAN PATENT APPLICATION

(11) **EP 2 840 443 A1**
(43) Date of publication of application: **25.02.2015**
(21) Application number: 14155633.2
(22) Date of filing: 18.02.2014
(51) Int. Cl.: G02F 1/1347, G02F 1/1335

(54) **Display apparatus and control method thereof**

(30) Priority: 19.08.2013 KR 20130097825
(71) Applicant: Samsung Electronics Co., Ltd., Suwon-si Gyeonggi-do 443-742 (KR)
(72) Inventor: Hwang, Ju-seong, Chungcheongnam-do (KR); Cho, Kun-ho, Gyeonggi-do (KR); Choi, Hyeong-sik, Gyeonggi-do (KR)
(74) Representative: Taor, Simon Edward William

(57) **Abstract**

A display apparatus and a control method thereof are provided. The display apparatus includes: a power supply which supplies power to elements of the display apparatus; a mirror which is switchable between a mirror mode and a transparency mode; and a controller which controls the power supply. When power is shut off from the mirror, the mirror operates in the mirror mode, and when power is supplied to the mirror, the mirror operates in the transparency mode.

## Description

Apparatuses and methods consistent with exemplary embodiments relate to a display apparatus and a control method thereof, and more particularly, to a display apparatus which has a mirror function and a control method thereof.

With the development of technologies, display apparatuses have expanded their functions such that they can provide not only a playback function to provide video information but also an interior decoration function.

The related-art display apparatuses have become slimmer and simpler in terms of the interior decoration function. Therefore, the display apparatuses may serve as interior decorations in terms of a visual aspect.

Furthermore, the display apparatus may provide a practical function as well as such a decorative interior function. For example, the display apparatus may perform a mirror mode operation to function as a mirror when power is turned off.

However, power should be always supplied to the display apparatus so that the display apparatus can operate in the mirror mode. Specifically, in order to operate in the mirror mode, the display apparatus should reflect external light having a first polarization of one axis direction using a polarizing film provided therein. To achieve this, the display apparatus should supply power to a polarizing switch to cause the polarizing film to reflect the first polarization. That is, in order to operate in the mirror mode, the related-art display apparatus should continue to supply power to the polarizing switch even when the display apparatus is turned off. Therefore, there is a problem in that power is consumed.

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a display apparatus which can minimize power consumption when the display apparatus operates in a mirror mode or a transparency mode, and a control method thereof.

One or more exemplary embodiments also provide a slim display apparatus which can reduce a manufacturing cost by simplifying a configuration to operate the display apparatus in a mirror mode or in a transparency mode to display an image.

According to an aspect of an exemplary embodiment, there is provided a display apparatus including: a power supply configured to supply power to elements of the display apparatus; a mirror configured to operate in a mirror mode or a transparency mode ; and a controller configured to control the power supply to the mirror, such that the mirror is in the mirror mode when power is shut off from the mirror, and mirror is in the transparency mode when power is supplied to the mirror The mirror includes: an absorption type polarizer configured to transmit light having a first polarization, of the incident external light, and to absorb light having a second polarization different from the first polarization; a polarizing switch configured to change a polarization direction of the light having the first polarization to light having the second polarization and to transmit light having the first polarization without changing a polarization direction thereof according to whether power is supplied by the power supply or not; and a reflection type polarizer configured to transmit light having the first polarization and to reflect light having the second polarization.

The display apparatus may further include an image outputter configured to output an image, and the mirror may display an image which is output through the image outputter while the mirror is in the transparency mode.

The controller may control the power supply to shut off power supply to the image outputter and the polarizing switch while the mirror is in the mirror mode, and to supply power to the image outputter and the polarizing switch while the mirror is in the transparency mode.

When polarization reflected from the reflection type polarizer passes through the polarizing switch, the polarizing switch may change the reflected light having the second polarization to light having the first polarization and may project the light having the first polarization onto the absorption type polarizer.

When power supply is shut off by the power supply, the polarizing switch may change the polarization direction of light having the first polarization to light having the second polarization, and, when the power is supplied, the polarizing switch may transmit the light having the first polarization without changing a polarization direction thereof.

When power supply is shut off by the power supply, the polarizing switch may change the polarization direction of the light having the first polarization by 90° or 270°, and, when the power is supplied, the polarizing switch may transmit the light having the first polarization without changing a polarization direction thereof.

The polarizing switch may include: a glass disposed on a side of the polarizing switch adjacent to the absorption type polarizer, a plurality of transparent electrodes arranged on the glass at regular intervals; a sealing member, and a liquid crystal material disposed between the glass and the sealing member.

The polarizing switch may include: a first glass disposed on a side of the polarizing switch adjacent to the absorption type polarizer, a second glass disposed on a side of the polarizing switch adjacent to the reflection type polarizer, a first transparent electrode disposed on the first glass, a second transparent electrode disposed on the second glass, a sealing member, and a liquid crystal material disposed between the first glass and the second glass.

The image outputter may include: a liquid crystal panel disposed on a lower surface of the reflection type polarizer and configured to display an image through pixels formed where a plurality of scan lines and a plurality of data lines intersect; a backlight unit configured to project light emitted from red, green, and blue light emitting diodes; and an absorption type polarizer disposed between the liquid crystal panel and the backlight unit to project light emitted from the backlight unit onto the liquid crystal panel. The liquid crystal panel may change a polarization direction of light passing through the absorption type polarizer to light having the first polarization and may project the light having the first polarization onto the reflection type polarizer.

The liquid crystal panel may include: a first glass disposed on a side of the liquid crystal panel adjacent to the reflection type polarizer, a second glass disposed on a side of the liquid crystal panel adjacent to the absorption type polarizer, a first transparent electrode disposed on the first glass, a second transparent electrode disposed on the second glass, a sealing member, and a liquid crystal material disposed between the first glass and the second glass.

According to an aspect of another exemplary embodiment, there is provided a control method of a display apparatus, the method including: supplying power to elements of the display apparatus; determining whether power is supplied to a mirror which operates in a mirror mode or a transparency mode ; and when it is determined that power is supplied to the mirror, setting an operation mode of the mirror to the transparency mode, and, when power supply to the mirror is shut off, setting the operation mode of the mirror to the mirror mode, wherein the setting includes: an absorption type polarizer of the mirror transmitting light having a first polarization direction and absorbing light having a second polarization, different from the first polarization ; a polarizing switch changing a polarization direction of light having the first polarization to light having the second polarization or transmitting the light having the first polarization without changing the polarization direction thereof according to whether power is supplied or not; and, a reflection type polarizer transmitting light having the first polarization and reflecting light having the second polarization.

The control method may further include, when the transparency mode is set, displaying an image output through an image outputter.

The supplying the power may include shutting off power supply to the image outputter and the polarizing switch while the mirror is in the mirror mode, and supplying power to the image outputter and the polarizing switch while the mirror is in the transparency mode.

The changing the polarizing direction may include, when light having the second polarization is reflected from the reflection type polarizer, the polarizing switch changing the reflected light having the second polarization to light having the first polarization and projecting the light having the first polarization onto the absorption type polarizer.

The changing the polarizing direction may include, when power supply to the polarizing switch is shut off, the polarizing switch changing the polarizing direction of the light having the first polarization to light having the second polarization, and, when the power is supplied to the polarizing switch, the polarizing switch transmitting the light having the first polarization without changing a polarization direction thereof.

The changing the polarizing direction may include, when power supply to the polarizing switch is shut off, the polarizing switch changing the polarizing direction of the light having the first polarization by 90° or 270°, and, when the power is supplied, the polarizing switch transmitting the light having the first polarization without changing a polarization direction thereof.

The polarizing switch may include a glass disposed on a side of the polarizing switch adjacent to the absorption type polarizer, a plurality of transparent electrodes disposed on the glass at regular intervals, a sealing member, and a liquid crystal material disposed between the glass and the sealing member.

The polarizing switch may have a first glass disposed on a side of the polarizing switch adjacent to the absorption type polarizer, a second glass disposed on a side of the polarizing switch adjacent to the reflection type polarizer, a first transparent electrode disposed on the first glass, a second transparent electrode disposed on the second glass, a sealing member, and a liquid crystal material disposed between the first glass and the second glass.

The displaying may include, when light emitted from a backlight unit is projected onto a liquid crystal panel through an absorption type polarizer, the liquid crystal panel changing a polarization direction of the light emitted form the backlight to light having the first polarization and projecting the light having the first polarization onto the reflection type polarizer.

The liquid crystal panel may include a first glass disposed on a side of the liquid crystal panel adjacent to the reflection type polarizer, a second glass disposed on a side of the liquid crystal panel adjacent to the absorption type polarizer, a first transparent electrode disposed on the first glass, a second transparent electrode disposed on the second glass, and a liquid crystal material disposed between the first glass and the second glass.

Accordingly, one or more exemplary embodiments may minimize the power consumption when the display apparatus operates in the mirror mode or the transparency mode. Furthermore, according to one or more exemplary embodiments, a slim display apparatus may be manufactured with a reduced manufacturing cost by simplifying the configuration to operate the display apparatus in the mirror mode or the transparency mode to display the image.

The above and/or other exemplary aspects and advantages will be more apparent by describing in detail exemplary embodiments, with reference to the accompanying drawings, in which:
FIG. 1 is a block diagram illustrating a display apparatus according to an exemplary embodiment;
FIG. 2 is a view illustrating an example of a display apparatus which operates in a mirror mode according to an exemplary embodiment;
FIG. 3 is a view illustrating an example of a display apparatus which operates in a transparency mode according to an exemplary embodiment;
FIG. 4 is a view illustrating a configuration of a display panel of a display apparatus according to an exemplary embodiment;
FIG. 5 is a first configuration diagram of a polarizing switch according to an exemplary embodiment;
FIG. 6 is a second configuration diagram of a polarizing switch according to another exemplary embodiment;
FIG. 7 is a detailed configuration diagram of an image outputter according to an exemplary embodiment;
FIG. 8 is a flowchart illustrating a control method of a display apparatus according to an exemplary embodiment;
FIG. 9 is a flowchart illustrating a method for operating a display apparatus in a mirror mode according to an exemplary embodiment; and
FIG. 10 is a flowchart illustrating a method for operating a display apparatus in a transparency mode according to an exemplary embodiment.

Hereinafter, exemplary embodiments will be described in greater detail with reference to the accompanying drawings.

In the following description, the same reference numerals are used for the same elements when they are depicted in different drawings. The matters defined in the description, such as detailed construction and elements, are provided to assist in a comprehensive understanding of exemplary embodiments. Thus, it is apparent that exemplary embodiments can be carried out without those specifically defined matters. Also, functions or elements known in the related art are not described in detail since they would obscure the exemplary embodiments with unnecessary detail.

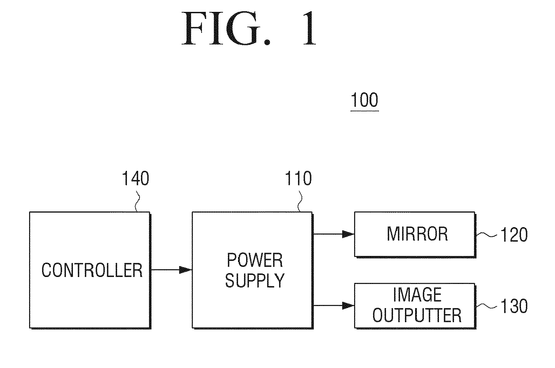

FIG. 1 is a block diagram of a display apparatus according to an exemplary embodiment.

As shown in FIG. 1, according to a power supply state, a display apparatus 100 may switch between a mirror mode, in which external light is reflected, and a transparency mode, in which a played back image is displayed. The display apparatus 100 may be an electronic apparatus like a smart television (TV), a smartphone, a tablet personal computer (PC), etc.

In order to enter the mirror mode or the transparency mode according to the power supply state, the display apparatus 100 may include a power supply 110, a mirror 120, an image outputter 130, and a controller 140.

The power supply 110 supplies power to each element of the display apparatus 100. The mirror 120 operates in the mirror mode or in the transparency mode. In other words, the mirror 120 can either be reflective (or at least partially reflective) or transparent (or at least partially transparent). The controller 140 controls the power supply 110 to shut off the power to the mirror 120 in the mirror mode and to supply power to the mirror 120 in the transparency mode.

According to an exemplary embodiment, the controller 140 may control the power supply 110 to shut off the power supply to the mirror 120 while the mirror 120 operates in the mirror mode and to supply power to the mirror 120 while the mirror 120 operates in the transparency mode.

According to another exemplary embodiment, the controller 140 may control the power supply 110 to shut off the power supply to the image outputter 130 and the mirror 120 while the mirror 120 operates in the mirror mode, and to supply power to the image outputter 120 outputting an image and the mirror 120 while the mirror 120 operates in the transparency mode.

That is, when power is supplied to the display apparatus 100 according to a user command, the controller 140 controls the power supply 110 to supply power to the mirror 120. Accordingly, the power supply 110 supplies power to the mirror 120. When the power supply 110 supplies power to the mirror 120, the mirror 120 operates in the transparency mode and displays an image output through the image outputter 130.

On the other hand, when the power supply to the display apparatus 100 is shut off according to a user command, the controller 140 controls the power supply 110 to shut off the power supply to the mirror 120. Accordingly, the power supply 110 shuts off the power supply to the mirror 120. When the power supply to the mirror 120 is shut off, the mirror 120 operates in the mirror mode. Accordingly, the display apparatus 100 serves as a mirror to display an external object.

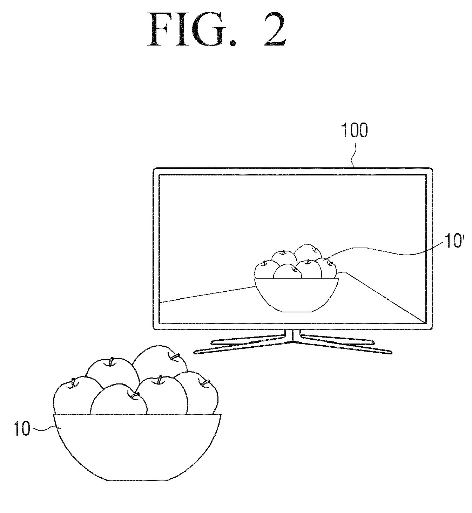

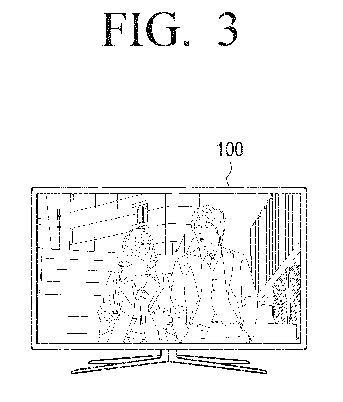

FIG. 2 is a view illustrating an example of a display apparatus which operates in a mirror mode according to an exemplary embodiment, and FIG. 3 is a view illustrating an example of a display apparatus which operates in a transparency mode according to an exemplary embodiment.

As show in FIG. 2, the power supply to the display apparatus 100 is shut off. In this case, the power supply 110 shuts off the power supply to the mirror 120 according to a control command of the controller 140. When the power supply is shut off, the mirror 120 enters the mirror mode and performs a mirror operation. Accordingly, when an object 10, a bowl of apples, is placed in front of the display apparatus 100, the display apparatus 100 may display an object image 10' corresponding to the object 10 placed in front of the display apparatus 100 by means of the mirror 120, which operates in the mirror mode.

On the other hand, the display apparatus 100 may be supplied with the power as shown in FIG. 3. Accordingly, when the power is supplied to the image outputter 130, the power supply 110 supplies the power to the mirror 120 according to a control command of the controller 140. When the power is supplied to the mirror 120, the mirror 120 changes from the mirror mode to the transparency mode. Accordingly, the display apparatus 100 projects the image output from the image outputter 130 onto the mirror 120 in the transparency mode, thereby displaying the image.

As described above, the display apparatus 100 controls the power supply to the mirror 120 to operate the mirror 120 in the mirror mode or the transparency mode according to whether the power is supplied to the display apparatus 100, so that the display apparatus 100 may perform the mirror function or the image output function.

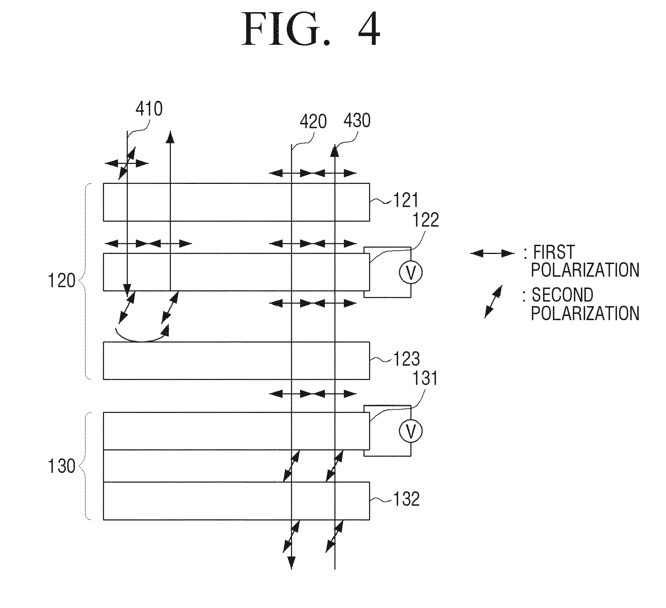

The mirror 120 which operates in the mirror mode or the transparency mode, to display an image using the incident external light or an image output by the image outputter 130, may be configured as shown in FIG. 4.

FIG. 4 is a view illustrating an example of a configuration of a display panel of a display apparatus according to an exemplary embodiment.

As shown in FIG. 4, the display panel of the display apparatus 100 includes a mirror 120 and an image outputter 130. As shown in FIG. 4, the mirror 120 may be disposed on an upper side of the display panel, and the image outputter 130 may be disposed on a lower side of the mirror 120. That is, the mirror 120 may face a user, and the image outputter 130 may be disposed behind the mirror 120, with respect to the user's viewing position.

The mirror 120, which faces the user, includes an absorption type polarizer 121, a polarizing switch 122, and a reflection type polarizer 123. The image outputter 130, which is placed behind the mirror 120, includes a liquid crystal panel 131 and an absorption type polarizer 132. The absorption type polarizer 121 of the mirror 120 is disposed on an upper side of the mirror 120, the polarizing switch 122 is disposed on a lower side of the absorption type polarizer 121, and the reflection type polarizer 123 is disposed on a lower side of the polarizing switch 122.

The absorption type polarizer 121 transmits light having a first polarization, and absorbs light having a second polarization, different from the first polarization. The first polarization may be polarized light that has a plane of vibration parallel to a polarizing axis of the absorption type polarizer 121, and the second polarization may be polarized light that has a plane of vibration parallel to a direction perpendicular to the polarizing axis of the absorption type polarizer 121.

The absorption type polarizer 121 may be in the form of a stacked structure of protection films such as a surface treatment film (not shown), triacetyl cellulose (TAC) (not shown), an absorption type polarizing film (polyvinyl alcohol (PVA)) (not shown), and a phase difference correction film (not shown). The absorption type polarizer 121 has a well-known configuration and thus a detailed description is omitted.

The polarizing switch 122 changes a polarizing direction of light transmitted therethrough according to whether power is supplied to the polarizing switch 122 by the power supply 110.

According to an exemplary embodiment, when the power supply is shut off by the power supply 110, the polarizing switch 122 changes light having the first polarization to light having the second polarization, and, when power is supplied by the power supply 110, the polarizing switch 122 transmits light having the first polarization without changing the polarization of the transmitted light.

According to another exemplary embodiment, when the power supply is shut off by the power supply 110, the polarizing switch 122 changes the polarization of the light having the first polarization direction by to 90° or 270°, and, when power is supplied by the power supply 110, the polarizing switch 122 transmits the light having the first polarization without changing the polarization direction thereof.

When the first polarization is transmitted through the polarizing switch 122 without changing the polarization direction thereof, the reflection type polarizer 123 transmits the light having the first polarization onto the image outputter 130, which will be describes later. When the polarizing switch 122 changes the polarization direction of the light having the first polarization direction to light having a changed polarization direction, the reflection type polarizer 123 reflects the light having the changed polarization. The changed polarization may be the second polarization or the polarization that has been changed by 90° or 270°. That is, when light having the second polarization or light having a polarization that has been changed by 90° or 270° is transmitted by the polarizing switch 122, the reflection type polarizer 123 reflects the light back to the polarizing switch 122 to be re-transmitted and changed back into light having the first polarization. The reflection type polarizer 123 may be in the form of a stacked structure of protection films such as over coat, a phase difference correction film, a reflection type polarizing film, etc.

When the power supply to the polarizing switch 122 is shut off by the power supply 110 and the light reflected by the reflection type polarizer 123 is transmitted through the polarizing switch 122, the polarizing switch 122 changes the polarization of the reflected light back to the first polarization direction and transmits the light having the first polarization onto the absorption type polarizer 121. Accordingly, the absorption type polarizer 121 transmits the light having the first polarization, which has been transmitted through the polarizing switch 122, such that the mirror 120 can operate in the mirror mode.

As shown in FIG. 4, when the power supply to the polarizing switch 122 is shut off and external light 410 enters, of the incident external light, the absorption type polarizer 121 allows only light having the first polarization direction to be transmitted, and the polarizing switch 122 changes the transmitted light having the first polarization to light having the second polarization. Accordingly, the reflection type polarizer 123 reflects the light having the second polarization that has been transmitted by the polarizing switch 122. When the light having the second polarization is reflected by the reflection type polarizer 123, it is transmitted by the polarizing switch 122, and the polarizing switch 122 changes the light having the second polarization to light having the first polarization. The absorption type polarizer 121 then allows the light having the first polarization to be transmitted, such that the mirror 120 can operate in the mirror mode. Accordingly, the display apparatus 100 may perform the mirror function by means of the mirror 120, which operates in the mirror mode.

On the other hand, when power is supplied to the polarizing switch 122 and external light 420 enters the display apparatus, the absorption type polarizer 121 allows only light having the first polarization to be transmitted therethrough, and the polarizing switch 122 transmits the light having the first polarization without changing the polarization direction of the light. Accordingly, the reflection type polarizer 123 transmits the light having the first polarization onto the image outputter 130, such that the mirror 120 can operate in the transparency mode. As the mirror 120 operates in the transparency mode as described above, the display apparatus 100 may display an image which is output from the image outputter 130 through the mirror 120 which operates in the transparency mode when the image is output through the image outputter 130.

The image outputter 130 includes the liquid crystal panel 131 and the absorption type polarizer 132 as described above. The liquid crystal panel 131 is disposed on the lower side of the reflection type polarizer 123 which is disposed on the lower side of the mirror 120. When power is supplied by the power supply 110, the liquid crystal panel 131 displays an image through pixels formed where a plurality of scan lines and a plurality of data lines intersect. The absorption type polarizer 132 is disposed between the liquid crystal panel 131 and a backlight unit 133 which projects light emitted from red, green, and blue light emitting diodes, and projects the light emitted from the backlight unit 133 onto the liquid crystal panel 131. Accordingly, the liquid crystal panel 131 to which power is supplied changes the light passing through the absorption type polarizer 132 to light having the first polarization and allows the light having the first polarization to be transmitted through the reflection type polarizer 123 of the mirror 120 which operates in the transparency mode.

That is, when light 430, emitted from the backlight unit 133, is transmitted through the absorption type polarizer 132, the image outputter 130 projects the light onto the liquid crystal panel 131 to which power is supplied. Accordingly, the liquid crystal panel 131 changes the polarization of the light passing through the absorption type polarizer 132 to light having the first polarization and projects the light having the first polarization onto the reflection type polarizer 123 of the mirror 120 which operates in the transparency mode. The reflection type polarizer 123 projects the light having the first polarization, transmitted by the liquid crystal panel 131, onto the polarizing switch 122. The polarizing switch 122 transmits the light having the first polarization onto the absorption type polarizer 121. Accordingly, the display apparatus 100 may display the image output from the image outputter 130 through the mirror 120 which operates in the transparency mode.

Hereinafter, each element of the above-described polarizing switch 122 will be explained.

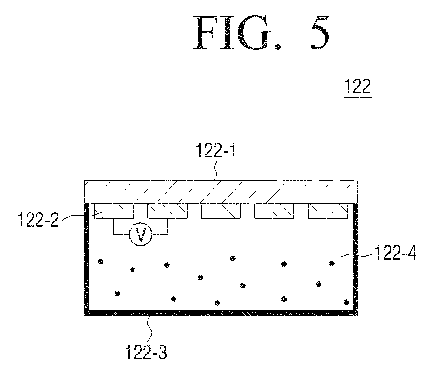

FIG. 5 is a first configuration diagram of a polarizing switch according to an exemplary embodiment.

As shown in FIG. 5, the polarizing switch 122 changes light having the first polarization, transmitted by the absorption type polarizer 121, to light having the second polarization according to whether power is supplied by the power supply 110. the polarizing switch 122 includes a glass 122-1 and a sealing member 122-3. The glass 122-1 and the sealing member 122-3 are bonded to each other and a liquid crystal material 122-4 is disposed between the glass 122-1 and the sealing member 122-3.

The glass 122-1 may be disposed on a surface of the polarizing switch 122 adjacent to the absorption type polarizer 121 and a plurality of transparent electrodes 122-2 may be arranged on an inner surface of the glass 122-1 at regular intervals. As shown in FIG. 5, the plurality of transparent electrodes arranged on the inner surface of the glass 122-1 are provided in pairs and are supplied with power by the power supply 110.

When power is supplied through the plurality of pairs of transparent electrodes 122-2, the polarizing switch 122 may transmit light having the first polarization from the absorption type polarizer 121 onto the reflection type polarizer 123 or may transmit light having the first polarization from the reflection type polarizer 123 onto the absorption type polarizer 121.

On the other hand, when power is not supplied through the plurality of pairs of transparent electrodes 122-2, the polarizing switch 122 changes the polarization of the light having the first polarization, transmitted through the absorption type polarizer 121, to light having the second polarization and transmits the light having the second polarization onto the reflection type polarizer 123. The polarizing switch also changes the polarization of light having the second polarization, transmitted through the reflection type polarizer 123, to light having the first polarization and transmits the light having the first polarization onto the absorption type polarizer 121.

In this exemplary embodiment, the plurality of transparent electrodes 122-2 are arranged is the glass 122-13. However, this should not be considered as limiting. Alternately, the plurality of transparent electrodes 122-2 may be arranged on the sealing member 122-2.

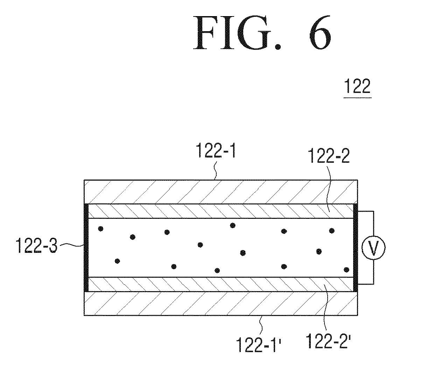

FIG. 6 is a second configuration diagram of a polarizing switch according to another exemplary embodiment.

As shown in FIG. 6, the polarizing switch 122 changes light having the first polarization, transmitted by the absorption type polarizer 121, to light having the second polarization, according to whether power is supplied by the power supply 110. The polarizing switch 122 includes a first glass 122-1, a second glasses 122-1', and a sealing member 122-3. The first glass 122-1 and the second glass 122-1' and the sealing member 122-3 may be bonded to each other, and a liquid crystal material 122-4 is disposed in the area bounded by between the first and second glasses 122-1 and 122-1' and the sealing member 122-3.

Specifically, the first glass 122-1 may be disposed adjacent to the absorption type polarizer 121 and the second glass 122-1' may be disposed adjacent to the reflection type polarizer 123. Also, the first glass 122-1 and the second glass 122-1' may have single transparent electrodes 122-2 and 122-2' arranged on inner surfaces thereof, respectively. As shown in FIG. 6, the single transparent electrodes 122-2 and 122-2' arranged on the inner surfaces of the first glass 122-1 and the second glass 122-1', respectively, may be supplied with power by the power supply 110. When power is supplied through the single transparent electrodes 122-2 and 122-2', the polarizing switch 122 may transmit the light having the first polarization, transmitted through the absorption type polarizer 121, onto the reflection type polarizer 123, and may transmit the light having the first polarization, transmitted through the reflection type polarizer 123, onto the absorption type polarizer 121.

On the other hand, when power is not supplied through the single transparent electrodes 122-2 and 122-2', the polarizing switch 122 may change light having the first polarization, transmitted through the absorption type polarizer 121, to light having the second polarization transmit the light having the second polarization onto the reflection type polarizer 123, and may change light having the second polarization, transmitted through the reflection type polarizer 123, to light having the first polarization and may transmit the light having the first polarization onto the absorption type polarizer 121.

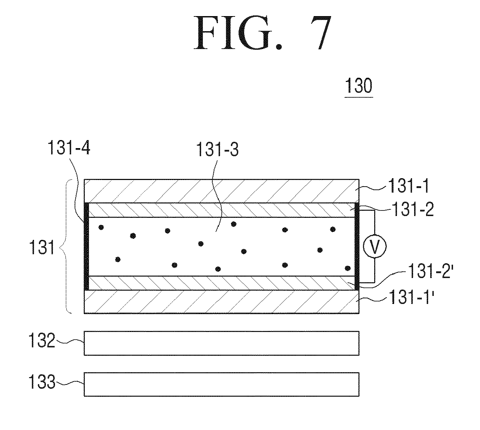

FIG. 7 is a detailed configuration diagram of an image outputter according to an exemplary embodiment.

As described above, the image outputter 130 includes a liquid crystal panel 131 and an absorption type polarizer 132. When power is supplied by the power supply 110, the liquid crystal panel 131, which is disposed on a lower side of the reflection type polarizer 123, displays an image through pixels formed where a plurality of scan lines and a plurality of data lines intersect. The absorption type polarizer 132 is disposed between the liquid crystal panel 131 and a backlight unit 133 which projects light emitted from red, green, and blue light emitting diodes, and projects the light emitted from the backlight unit 133 onto the liquid crystal panel 131. Accordingly, the liquid crystal panel 133 to which power is supplied may change the polarization of the light passing through absorption type polarizer 132 to light having the first polarization and may transmit the light having the first polarization onto to the reflection type polarizer 123 of the mirror 120 which operates in the transparency mode.

The above-described liquid crystal panel 131 may correspond to the polarizing switch 122 explained in FIG. 6 in its constitution. Specifically, the liquid crystal panel 131 includes first and second glasses 131-1 and 131-1' and a sealing member 131-4 as shown in FIG. 7.

The first and second glasses 131-1 and 131-1' and the sealing member 131-4 may be bonded to each other and a liquid crystal material 131-3 may be disposed in a region defined by the first and second glasses 131-1 and 131-1' and the sealing member 131-4.

Specifically, the first glass 131-1 may be disposed adjacent to the reflection type polarizer 123 and the second glass 131-1' may be disposed adjacent to the absorption type polarizer 132. Also, the first glass 131-1 and the second glass 131-1' may have single transparent electrodes 131-2 and 131-2' arranged on inner surfaces thereof, respectively. As shown in FIG. 7, the single transparent electrodes 131-2 and 131-2' arranged on the inner surfaces of the first glass 131-1 and the second glass 131-1', respectively, may be supplied with power by the power supply 110. When power is supplied through the single transparent electrodes 131-2 and 131-2', the liquid crystal panel 131 may transmit the light having the first polarization, transmitted through the absorption type polarizer 132 and may transmit the light having the first polarization onto the reflection type polarizer 123 of the mirror 120 which operates in the transparency mode. Accordingly, the display apparatus 100 may display an image output from the image outputter 130 through the mirror 120 which operates in the transparency mode.

Up to now, each element of the display apparatus 100 according to exemplary embodiments has been described in detail. Hereinafter, a control method of a display apparatus 100 according to exemplary embodiments will be explained in detail.

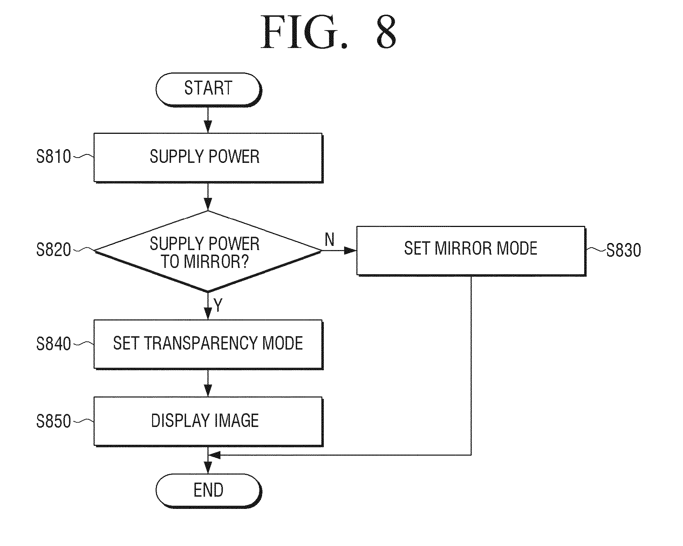

FIG. 8 is a flowchart illustrating a control method of a display apparatus according to an exemplary embodiment.

As shown in FIG. 8, the display apparatus 100 supplies power to each element of the display apparatus 100 (S810). When power is supplied to each element, the display apparatus 100 determines whether power is supplied to the mirror which operates in a mirror mode or a transparency mode (S820). When it is determined that the power supply to the mirror is shut off, the display apparatus 100 sets an operation mode of the mirror to be the mirror mode (S830). When it is determined that power is supplied to the mirror, the display apparatus 100 sets the operation mode of the mirror to the transparency mode (S840). When the transparency mode is set, the display apparatus 100 displays an image output through the image outputter (S850).

According to an exemplary embodiment, the display apparatus 100 may shut off the power supply to the mirror while the mirror operates in the mirror mode, and may supply power to the mirror while the mirror operates in the transparency mode.

According to another exemplary embodiment, the display apparatus 100 may shut off the power supply to the image outputter and the mirror while the mirror operates in the mirror mode, and may supply power to the image outputter outputting the image and the mirror while the mirror operates in the transparency mode.

That is, when power is supplied to the display apparatus 100 according to a user command, the display apparatus 100 supplies power to the mirror, and the mirror operates in the transparency mode. When the mirror is in the transparency mode as described above, the display apparatus 100 may display an image output through the image outputter as shown in FIG. 3. On the other hand, when the power supply to the display apparatus 100 is shut off according to a user command, the display apparatus 100 shuts off the power supply to the mirror, and the mirror operates in the mirror mode. When the mirror is in the mirror mode as described above, the display apparatus 100 may perform the mirror function of displaying an external object as shown in FIG. 2.

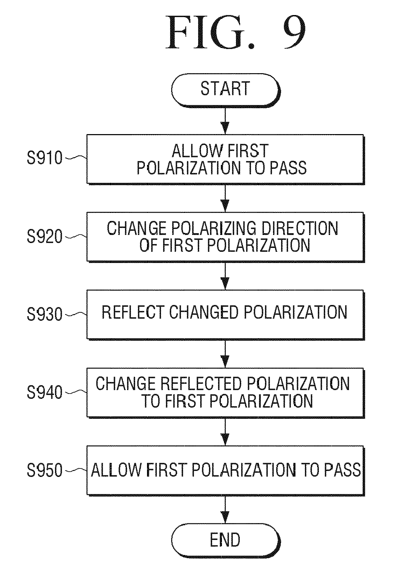

FIG. 9 is a flowchart illustrating a method for operating a display apparatus in a mirror mode according to an exemplary embodiment.

As shown in FIG. 9, when external light enters the display apparatus 100, the display apparatus 100 allows light having a first polarization to pass through the absorption type polarizer, and the absorption type polarizer absorbs light having a second polarization (S910). The first polarization may be polarized light that has a plane of vibration parallel to a polarizing axis of the absorption type polarizer, and the second polarization may be polarized light that has a plane of vibration parallel to a direction perpendicular to the polarizing axis of the absorption type polarizer.

As described above, when the light having the second polarization is absorbed through the absorption type polarizer and the light having the first polarization is transmitted through the absorption type polarizer, the display apparatus 100 changes a direction of polarization direction of the light having the first polarization, transmitted through the absorption type polarizer, using the polarizing switch according to whether power is supplied or not (S920).

According to an exemplary embodiment, when the power supply to the polarizing switch is shut off, the polarizing switch changes the light having the first polarization, transmitted through the absorption type polarizer, to light having the second polarization. On the other hand, when power is supplied to the polarizing switch, the polarizing switch transmits the light having the first polarization, transmitted through the absorption type polarizer, without changing the polarization direction of the light.

According to another exemplary embodiment, when the power supply to the polarizing switch is shut off, the polarizing switch changes the polarizing direction of the light having the first polarization, transmitted through the absorption type polarizer, by 90° or 270°. On the other hand, when power is supplied to the polarizing switch, the polarizing switch transmits the light having the first polarization, without changing a polarization direction thereof.

That is, when power is supplied to the polarizing switch, the display apparatus 100 maintains the polarizing direction of the light having the first polarization direction, as it is transmitted through the polarizing switch, such that the display apparatus 100 can operate in the transparency mode as in operation S840 of FIG. 8. The method for operating the display apparatus 100 in the transparency mode will be explained below in detail.

On the other hand, when the power supply to the polarizing switch is shut off as described above, the polarizing switch changes the polarizing direction of the light having the first polarization, transmitted through the absorption type polarizer, to light having the second polarization. When the polarizing direction of the light having the first polarization is changed to the second polarization direction, the display apparatus 100 reflects the light having the second polarization using the reflection type polarizer (S930).

After that, when the light having the second polarization is reflected from the reflection type polarizer, the display apparatus 100 transmits the reflected light having the second polarization onto the polarizing switch, and the polarizing switch changes the polarizing direction of the light having the second polarization to the first polarization direction (S940). After that, the display apparatus 100 transmits the light having first polarization, changed by the polarizing switch, onto the absorption type polarizer (S950). Accordingly, the absorption type polarizer transmits the light having the first polarization, transmitted by the polarizing switch, such that the display apparatus 100 operates in the mirror mode and performs a mirror function.

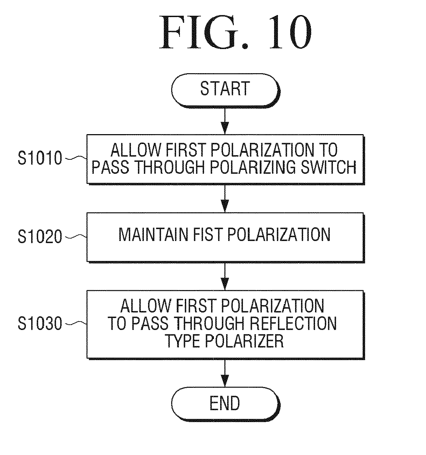

FIG. 10 is a flowchart illustrating a method for operating a display apparatus in a transparency mode according to an exemplary embodiment.

As shown in FIG. 10, the display apparatus 100 allows light having the first polarization to be transmitted through the absorption type polarizer, and the absorption type polarizer absorbs light having the second polarization (S1010). When the light having the first polarization passes through the absorption type polarizer, the display apparatus 100 transmits the light first polarization onto the polarizing switch to which power is supplied as described above. Accordingly, the display apparatus 100 maintains the polarizing direction of the light having first polarization as it is through the polarizing switch to which power is supplied (S1020). When the polarizing direction of the light having the first polarization is maintained through the polarizing switch, the display apparatus 100 transmits the light having first polarization onto the reflection type polarizer (S1030). Accordingly, the reflection type polarizer transmits the light having the first polarization onto the image outputter, such that display apparatus 100 operates in the transparency mode. As the display apparatus 100 operates in the transparency mode, the display apparatus 100 may display an image output from the image outputter on a screen.

As described above, the display apparatus 100 may operate in the transparency mode or the mirror mode, by using the reflection type polarizer which allows the light having the first polarization to pass therethrough and reflects the light having the second polarization.

As discussed above, embodiments of the invention provide a display apparatus comprising: a power supply configured to supply power to elements of the display apparatus; a mirror (or mirror unit) configured to operate in one of a mirror mode and a transparency mode; and a controller configured to control the power supply to the mirror, wherein the mirror is in the mirror mode when the controller controls the power supply to shut off power supply to the mirror, and the mirror is in the transparency mode when the controller controls the power supply to supply power to the mirror, wherein the mirror comprises: an absorption type polarizer arranged to transmit light having a first polarization and to absorbs light having a second polarization, different from the first polarization; a polarizing switch arranged to change a polarization of light incident thereon between light having the first polarization direction and light having the second polarization, or to transmit light incident thereon without changing a polarization of the light incident thereon, according to whether power is supplied by the power supply or not; and a reflection type polarizer arranged to transmit light having the first polarization and to reflects light having the second polarization.

Embodiments of the invention also provide a control method of a display apparatus, the method comprising: supplying power to elements of the display apparatus; determining whether power is supplied to a mirror; and when it is determined that power is supplied to the mirror, setting an operation mode of the mirror to a transparency mode, and, when it is determined that power supply to the mirror is shut off, setting the operation mode of the mirror to a mirror mode, wherein the setting comprises: when the external light enters, allowing first polarization of one axis direction to pass through an absorption type polarizer of the mirror transmitting light having a first polarization and absorbing light having a second polarization, different from the first polarization; changing, by a polarizing switch transmitting the light having the first polarization, transmitted through the absorption type polarizer, without changing a polarization direction thereof, the polarizing switch changing the polarization direction of the light having the first polarization to light having the second polarization according to whether power is supplied or shut off; and a reflection type polarizer transmitting light having the first polarization, transmitted by the polarization switch, and the reflection type polarizer reflecting light having the second polarization, transmitted by the polarization switch.

The exemplary embodiments have been described up to now.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a power supply configured to supply power to elements of the display apparatus;
a mirror configured to operate in one of a mirror mode and a transparency mode; and
a controller configured to control the power supply to the mirror, wherein the mirror is in the mirror mode when the controller controls the power supply to shut off power supply to the mirror, and the mirror is in the transparency mode when the controller controls the power supply to supply power to the mirror,
wherein the mirror comprises:
an absorption type polarizer arranged to transmit light having a first polarization and to absorb light having a second polarization, different from the first polarization;
a polarizing switch arranged to change a polarization of light incident thereon between light having the first polarization direction and light having the second polarization, or to transmit light incident thereon without changing a polarization of the light incident thereon, according to whether power is supplied by the power supply or not; and
a reflection type polarizer arranged to transmit light having the first polarization and to reflect light having the second polarization.

2. The display apparatus as claimed in claim 1, further comprising an image outputter configured to output an image,
wherein the mirror is arranged to display an image which is output through the image outputter while the mirror is in the transparency mode.

3. The display apparatus as claimed in claim 2, wherein the mirror is in the mirror mode when the controller controls the power supply to shut off power supply to the image outputter and the polarizing switch, and the mirror is in the transparency mode when the controller controls the power supply to supply power to the image outputter and the polarizing switch.

4. The display apparatus as claimed in any one of claims 1 to 3, when light having the second polarization, reflected by the reflection type polarizer, is incident on the polarizing switch, the polarizing switch is arranged to change the polarization of the light transmitted therethrough and to output light having the first polarization onto the absorption type polarizer.

5. The display apparatus as claimed in claim 3 or 4, wherein, when power supply is shut off by the power supply, the polarizing switch is arranged to change the polarizing direction of light having the first polarization to light having the second polarization, and, when the power is supplied by the power supply, the polarizing switch is arranged to transmit light having the first polarization without changing a polarization direction of the light having the first polarization.

6. The display apparatus as claimed in any one of claims 3 to 5, wherein, when power supply is shut off by the power supply, the polarizing switch is arranged to change the polarizing direction of the light having the first polarization by 90° or 270°, and, when the power is supplied by the power supply, the polarizing switch is arranged to transmit light having the first polarization without changing a polarization direction of the light having of the first polarization.

7. The display apparatus as claimed in any one of claims 1 to 6, wherein the polarizing switch comprises:
a glass disposed on a side of the polarizing switch adjacent to the absorption type polarizer;
and having a plurality of transparent electrodes disposed on the glass at regular intervals;
a sealing member; and
a liquid crystal material disposed between the glass and the sealing member.

8. The display apparatus as claimed in any one of claims 1 to 7, wherein the polarizing switch comprises:
a first glass disposed on a side of the polarizing switch adjacent to the absorption type polarizer;
a second glass disposed on a side of the polarizing switch adjacent to the reflection type polarizer;
a first transparent electrode disposed of the first glass,
a second transparent electrode disposed on the second glass;
a sealing member connecting the first glass and the second glass; and
a liquid crystal material disposed between the first glass and the second glass.

9. The display apparatus as claimed in any one of claims 2 to 8, wherein the image outputter comprises:
a liquid crystal panel disposed on a lower surface of the reflection type polarizer and configured to display an image through pixels formed where a plurality of scan lines and a plurality of data lines intersect;
a backlight unit configured to project light emitted from red, green, and blue light emitting diodes; and
an absorption type polarizer, disposed between the liquid crystal panel and the backlight unit, arranged to transmit light emitted from the backlight unit onto the liquid crystal panel,
wherein the liquid crystal panel is arranged to change a polarization of light passing through the absorption type polarizer to light having the first polarization and transmits the light having the first polarization onto the reflection type polarizer.

10. The display apparatus as claimed in claim 9, wherein the liquid crystal panel comprises:
a first glass disposed on a side of the liquid crystal panel adjacent to the reflection type polarizer;
a second glass disposed on a side of the liquid crystal panel adjacent to the absorption type polarizer;
a first transparent electrode disposed on the first glass;
a second transparent electrode disposed on the second glass;
a sealing member connecting the first glass and the second glass; and
a liquid crystal material disposed between the first glass and the second glass.

11. A control method of a display apparatus, the method comprising:
supplying power to elements of the display apparatus;
determining whether power is supplied to a mirror; and
when it is determined that power is supplied to the mirror, setting an operation mode of the mirror to a transparency mode, and, when it is determined that power supply to the mirror is shut off, setting the operation mode of the mirror to a mirror mode,
wherein the setting comprises:
when the external light enters, allowing first polarization of one axis direction to pass through an absorption type polarizer of the mirror transmitting light having a first polarization and absorbing light having a second polarization, different from the first polarization;
changing, by a polarizing switch transmitting the light having the first polarization, transmitted through the absorption type polarizer, without changing a polarization direction thereof, the polarizing switch changing the polarization direction of the light having the first polarization to light having the second polarization according to whether power is supplied or shut off; and
a reflection type polarizer transmitting light having the first polarization, transmitted by the polarization switch, and the reflection type polarizer reflecting light having the second polarization, transmitted by the polarization switch.

12. The control method as claimed in claim 11, further comprising, when the transparency mode is set, displaying an image output through an image outputter.

13. The control method as claimed in claim 12, wherein the supplying the power comprises shutting off power supply to the image outputter and the polarizing switch while the mirror is in the mirror mode, and supplying power to the image outputter and the polarizing switch while the mirror is in the transparency mode.

14. The control method as claimed in any one of claims 11 to 13, wherein the setting further comprises, when the reflection type polarizer reflects light having the second polarization, the polarizing switch changing the polarization of light having the second polarization to light having the first polarization and transmitting light having the first polarization onto the absorption type polarizer.

15. The control method as claimed in claim 13 or 14, wherein the setting comprises, when power supply to the polarizing switch is shut off, the polarizing switch changing the polarizing direction of the light having the first polarization to light having the second polarization, and, when the power is supplied, the polarizing switch transmitting the light having the first polarization without changing the polarization direction thereof.
